# EUROPEAN PATENT APPLICATION

(11) **EP 4 672 700 A1**
(43) Date of publication of application: **31.12.2025**
(21) Application number: 24185023.9
(22) Date of filing: 27.06.2024
(51) Int. Cl.: H04L 41/5009, H04L 41/5019, H04W 24/00, H04L 41/40

(54) **METHOD FOR REALIZING NETWORK SERVICE LEVEL IMPROVEMENT AND/OR FOR ENHANCING NETWORK EFFICIENCY WITHIN OR RELATED TO A MOBILE COMMUNICATION NETWORK, SYSTEM OR MOBILE COMMUNICATION NETWORK, SERVICE LEVEL AGREEMENT FUNCTION, PROGRAM AND COMPUTER-READABLE MEDIUM**

(71) Applicant: Deutsche Telekom AG, 53113 Bonn (DE)
(72) Inventor: BLICKER, Stephan, 53343 Wachtberg (DE)
(74) Representative: Schwöbel, Thilo K.

(57) **Abstract**

The invention relates to a method for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function, wherein the mobile communication network and/or the core network furthermore comprises a service level agreement function, wherein, in order to realize network service level improvement and/or for enhancing network efficiency within or related to the mobile communication network one or a plurality of the network functions or services exchange messages with the service level agreement function, wherein the method comprises the following steps:
-- in a first step, the service level agreement function receives an analytics request message,
-- in a second step, the service level agreement function transmits an analytics response message.

## Description

### BACKGROUND

The present invention relates a method for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function.

Additionally, the present invention relates to a system or to a mobile communication network for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function.

Furthermore, the present invention relates to a service level agreement function for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function.

Furthermore, the present invention relates to a program and to a computer-readable medium for realizing network service level improvement and/or for enhancing network efficiency within or related to a mobile communication network according to the inventive method.

In conventionally known mobile communication networks, it is known to provide end-to-end communication services (or: to provide a certain service level) with appropriate handling in the different network domains - such as, e.g., the radio access network, the core network and/or the management and orchestration. It is furthermore known to use, or apply, service level agreements, i.e. users, or customers, of the mobile communication network (i.e. customers of the network operator thereof) have service level agreements (SLAs) which have to be served by the network operator, or a plurality of network operators, across all such network domains.

In this context, it is especially believed that automation and automation enabling will be a substantially beneficial factor in the future deployment of 5G networks (fifth generation networks) and/or 6G networks (sixth generation networks), especially in order to be able to more flexibly and more efficiently serve different segments of customers, or users, - especially in order in the aim to benefit from future network architectures. Such different segments of customers of network operators, i.e. customers using a considered mobile communication network or a plurality thereof, especially comprise, e.g., campus networks customers, slicing customers (i.e. customers using network slices), business customers, private customers with different tariffs (e.g. prepaid, postpaid, high value, low value) and properties (VIP customers, normal customers, low value customers).

### SUMMARY

An object of the present invention is to provide a technically simple, effective and cost effective solution for realizing network service level improvement and/or for enhancing network efficiency within or related to a mobile communication network, where it is possible to provide just the required service level (i.e. apply the agreed service level agreement) in an efficient manner. A further object of the present invention is to provide a corresponding system or mobile communication network, a corresponding service level agreement function, and a corresponding program and computer-readable medium.

The object of the present invention is achieved by a method for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function, wherein the mobile communication network and/or the core network furthermore comprises a service level agreement function, wherein, in order to realize network service level improvement and/or for enhancing network efficiency within or related to the mobile communication network one or a plurality of the network functions or services exchange messages with the service level agreement function, wherein the method comprises the following steps:
-- in a first step, the service level agreement function receives an analytics request message,
-- in a second step, the service level agreement function transmits an analytics response message.

According to the present invention, it is advantageously possible to use the service level agreement function in a manner such as to autonomously run service level agreement measurements and to provide service level agreement measurements or measurement results in real-time or near real-time, i.e. with only a comparatively small time lag between the measurement being performed (potentially revealing the necessity to adjust network performance and/or service level agreement-related measures) and the measurement result being available.
Especially according to the present invention, it is advantageously possible to use the service level agreement function in order to collect data from data sources of the core network, i.e. from operator 5GC data sources, and especially also including customer segments information.

This advantageously provides the possibility of an enhanced flexibility in assuring the service level provided by the mobile communication network and/or the possibility of an increased network efficiency, i.e. it is possible to assure (and to prove) that the required service level agreements are fulfilled, however by means of expending less network resources, or just the necessary network resources in order to fulfill the service level agreement.

Especially according to the present invention, the service level agreement function might be used to predicts service level agreement violations - especially by means of using machine learning capabilities.
According to the present invention, it is especially preferred that basically all network functions or services (i.e. especially 5G core network network functions or services as well as operations and maintenance (OAM) network nodes) are able to access the service level agreement function for getting service level agreement-based analytics information.

Hence, the present invention proposes the introduction of the service level agreement function. Especially according to the present invention, the service level agreement function is configured via service level agreement templates and provides service level agreement analytics to the 5G core live network (i.e. network functions or services of the core network and/or to the operations and maintenance network nodes). Especially according to the present invention, the service level agreement function provides more use case flexibility in comparison to the use cases of network data analytics function (NWDAF) (as specified in TS 23.288); furthermore especially, the service level agreement function is preferably tailored to customer segments and is especially able to make use of customer segment data.

It is preferred according to the present invention that any network function or service (of the mobile communication network, especially of the core network thereof) can access the measurements or measurement values of the service level agreement function, especially via service-based interfaces and initiate service improving measures based on the importance of the service level agreement or of the customer segment: exemplarily, it is advantageously possible in the context of the present invention that a policy and charging function (PCF) initiates quality-of-service (QoS) flow improvements or user equipment policy changes; furthermore, it is possible that an operations and maintenance entity or functionality (OAM) initiates changes in infrastructure and workload resources with the help of the (network) orchestrator and/or a domain controller entity or functionality.

According to the present invention, these advantages are able to be realized by means of the mobile communication network - especially the core network thereof - comprising a plurality of network functions or services, wherein the plurality of network functions or services at least comprises an operations and maintenance entity or functionality and a network data analytics function, and wherein, furthermore, the mobile communication network and/or the core network comprising the service level agreement function. Additionally, in order to realize network service level improvement and/or for enhancing network efficiency within or related to the mobile communication network, one or a plurality of the network functions or services exchange messages with the service level agreement function, and the method comprises the steps of:
-- the service level agreement function receiving an analytics request message, and
-- the service level agreement function transmits an analytics response message.

According to the present invention, it is furthermore advantageously possible and preferred that the mobile communication network and/or the core network additionally comprises a domain controller entity or functionality or a domain orchestrator layer, wherein network service level improvement and/or enhancement of network efficiency results from the interaction between the network functions or services with the service level agreement function, especially without involving the domain controller entity or functionality or domain orchestrator layer.

It is thereby advantageously possible to realize and implement the inventive method in a comparatively simple and efficient manner.

According to the present invention, it is furthermore advantageously possible and preferred that, in the first step, the service level agreement function receives the analytics request message from a network function or service of the mobile communication network, especially of the core network thereof, and/or wherein, in the second step, the service level agreement function transmits the analytics response message to the network function or service of the mobile communication network - especially of the core network thereof -, especially the one having transmitted the analytics request message.

It is thereby advantageously possible to realize and implement the inventive method in a comparatively simple and efficient manner.

Furthermore, it is advantageously possible and preferred according to the present invention that the service level agreement function provides one or a plurality of the following services and/or performs one or a plurality of the following tasks:
-- service level agreement measurements, especially in near real-time,
-- collection of data and/or information from operator core network data sources,
-- collection of data and/or information from customer segments,
-- calculation of measurements or of measurement results, especially of all measurements or measurement results,
-- predictions of future network performance and/or predictions of future violations of service level agreements.

It is thereby advantageously possible to efficiently realize and implement the inventive method in a comparatively simple and flexible manner.

Furthermore, it is advantageously possible and preferred according to the present invention that - by means of an interaction of one or a plurality of network functions or services, as consumers, with the service level agreement function - a reduction concerning the service level of the mobile communication network and/or a violation of one or a plurality of service level agreements is able to be prevented and/or healed, especially within the core network, and especially in a closed loops approach within the live core network domain, especially without interaction with the domain controller entity or functionality or domain orchestrator layer of the mobile communication network or the core network thereof.

It is thereby advantageously possible to realize and implement the inventive method in a comparatively simple and efficient manner.

Furthermore, it is advantageously possible and preferred according to the present invention that - by means of an interaction of an operations and maintenance entity or functionality of the mobile communication network, as consumer, with the service level agreement function - a reduction concerning the service level of the mobile communication network and/or a violation of one or a plurality of service level agreements is able to be prevented and/or healed, especially within the core network, especially without interaction with the domain controller entity or functionality or domain orchestrator layer of the mobile communication network or the core network thereof.

It is thereby advantageously possible to realize and implement the inventive method in a comparatively simple and efficient manner.

Furthermore, it is advantageously possible and preferred according to the present invention that the service level agreement function is deployed or instantiated by means of using one or a plurality of deployment templates, especially based on intents, especially customer facing intents, service intents and/or network domain intents, especially core network intents.

It is thereby advantageously possible to realize and implement the inventive method in a comparatively simple and efficient manner.

Furthermore, it is advantageously possible and preferred according to the present invention that the service level agreement function is deployed according to a data collection and handling framework separated from the network data analytics function or according to a data collection and handling framework jointly based on the network data analytics function.

It is thereby advantageously possible to realize and implement the inventive method in a comparatively simple and efficient manner.

Furthermore, the present invention relates to a system or mobile communication network for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function, wherein the mobile communication network and/or the core network furthermore comprises a service level agreement function, wherein, in order to realize network service level improvement and/or for enhancing network efficiency within or related to the mobile communication network one or a plurality of the network functions or services exchange messages with the service level agreement function, wherein the system or mobile communication network is configured such that:
-- the service level agreement function receives an analytics request message,
-- the service level agreement function transmits an analytics response message.

Furthermore, the present invention relates to a service level agreement function for realizing network service level improvement and/or for enhancing network efficiency within or related to a mobile communication network, wherein the mobile communication network comprises a radio access network and a core network, wherein the mobile communication network and/or the core network comprises a plurality of network functions or services, wherein the plurality of network functions or services at least comprises an operations and maintenance entity or functionality and a network data analytics function, wherein the mobile communication network and/or the core network furthermore comprises a service level agreement function, wherein, in order to realize network service level improvement and/or for enhancing network efficiency within or related to the mobile communication network one or a plurality of the network functions or services exchange messages with the service level agreement function, wherein the service level agreement function is configured such that:
-- the service level agreement function receives an analytics request message,
-- the service level agreement function transmits an analytics response message.

Additionally, the present invention relates to a program comprising a computer readable program code which, when executed on a computer and/or on a user equipment and/or on a network node of a mobile communication network, especially realizing a service level agreement function, or in part on the user equipment and/or in part on a network node of a mobile communication network, especially realizing a service level agreement function, causes the computer and/or the user equipment and/or the network node of the mobile communication network, especially realizing the service level agreement function, to perform the inventive method.

Additionally, the present invention relates to a computer-readable medium comprising instructions which when executed on a computer and/or on a user equipment and/or on a network node of a mobile communication network, especially realizing a service level agreement function, or in part on the user equipment and/or in part on a network node of a mobile communication network, especially realizing a service level agreement function, causes the computer and/or the user equipment and/or the network node of the mobile communication network, especially realizing the service level agreement function, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network comprising an access network, a core network and a user equipment, wherein the core network typically comprises a number of network functions or services, inter alia a service level agreement function according to the present invention.
Figure 2 schematically illustrates the mobile communication network with a plurality of network functions or services and again the service level agreement function.
Figure 3 schematically illustrates an example of an implementation of the service level agreement function in an embodiment where the service level agreement function is separated (or independently realized) from the network data analytics function of the mobile communication network.
Figure 4 schematically illustrates an example of an implementation of the service level agreement function in an embodiment where a joint realization of the service level agreement function and the network data analytics function is realized.
Figure 5 schematically illustrates an example of an implementation of how the service level agreement function is able to be configured and/or implemented using service level agreement templates.
Figure 6 schematically illustrates a communication diagram regarding the communication of a network function or service of the mobile communication network (especially of the core network thereof) with the service level agreement function according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

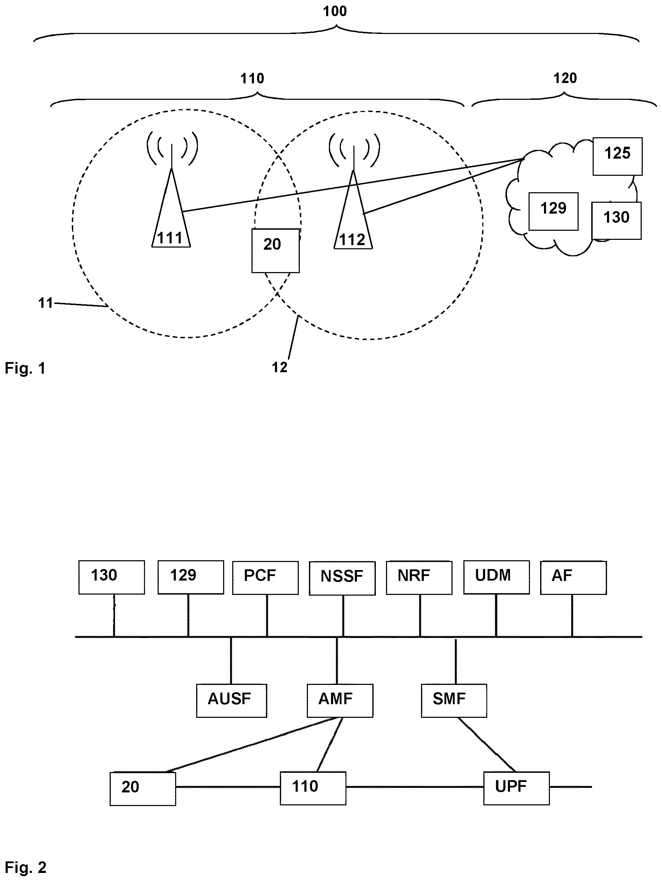

In Figure 1 a mobile communication network 100 comprising an access network 110, a core network 120 and a user equipment 20 is schematically illustrated.

The core network 120 typically comprises a number of network functions or services. Especially, Figure 1 schematically and exemplarily shows the core network 120 as comprising, inter alia, an operations and maintenance entity or functionality (OAM) 125 and a network data analytics function (NWDAF) 129.

According to the present invention, the mobile communication network 100 (and especially the core network 120 thereof) furthermore comprises a service level agreement function 130.
In order to realize network service level improvement and/or for enhancing network efficiency within or related to the mobile communication network 100, one or a plurality of the network functions or services (of especially the core network 120) exchange messages with the service level agreement function 130; especially, in a first step according to the inventive method, the respective (considered) network function or service transmits - and, subsequently, the service level agreement function 130 receives - an analytics request message, and, in a second step according to the inventive method, the service level agreement function 130 transmits - and, subsequently, the respective (considered) network function or service receives - an analytics response message, wherein especially the analytics response message corresponds (or relates) to the analytics request message.

The access network 110 comprises a plurality of radio cells 11, 12. In the exemplary situation or scenario shown in Figure 1, a first base station entity 111 generates (or, is associated with, or spans) the first radio cell 11, and a second base station entity 112 generates (or, is associated with or spans) the second radio cell 12. In the exemplary situation shown in Figure 1, the user equipment 20 is connected to the mobile communication network 100 via a radio interface to the first base station entity 111 and/or to the second base station entity 112. The user equipment 20 is typically, but not necessarily, mobile i.e. able to move with respect to the (typically, but not necessarily, static) radio cells 11, 12 or corresponding base station entities 111, 112 of the access network 110.

Typically (but not necessarily), the mobile communication network 100 - i.e. the access network 110 and/or the core network 120 - is connected to or comprises a machine-learning server entity (not explicitly shown in Figure 1).

In the exemplary situation or scenario represented in Figure 1, the service level agreement function 130 as well as the network data analytics function 129 and the operations and maintenance entity or functionality 125 are shown as being part of (or connected to) the core network 120. Especially, it might be the case (according to other embodiments of the present invention - not represented in Figure 1) that the service level agreement function 130 and/or the network data analytics function 129 is not part of the mobile communication network 100 or the core network 120 thereof but (only) accessible by (or to) the mobile communication network or core network 120.

Generally according to the present invention, the service level agreement function 130 is used to autonomously run and provide service level agreement measurements in near real-time and/or to collect data from operator 5G core network data sources (potentially including customer segments information). Especially, the service level agreement function 130 calculates all measurements or measurement results, predicts service level agreement violations (especially using machine learning capabilities). Especially, more or less all network functions or services of the 5G core network - especially including the operations and maintenance entity or functionality (or network nodes) - are able to be provide access to the service level agreement function for getting service level agreement-based analytics information.

Figure 2 schematically illustrates the mobile communication network 100 with a plurality of network functions or services (not specifically indicated by means of reference signs) and the service level agreement function 130 as well as the network data analytics function 129. The mobile communication network 100 comprises, as also shown in Figure 1, the radio access network 110 and the user equipment 20 (or a user equipment 20; typically, the mobile communication network 100 comprises, or communicates with or serves, a plurality of user equipments; however, for the sake of simplicity, only user equipment 20 is represented in Figure 2).

Furthermore, the mobile communication network 100 - or, rather, the core network 120 of the mobile communication network 100 - is schematically shown as comprising - besides the service level agreement function 130 and the network data analytics function 129 - a plurality of network functions or services; these network functions or services especially comprise: a user plane function UPF, a session management function SMF, an access and mobility management function AMF, an authentication server function AUSF. Furthermore, the mobile communication network 100 or its core network 120 comprises an application function AF, a unified data management UDM, a network repository function NRF, a network slice selection function NSSF, and a policy and charging function PCF.

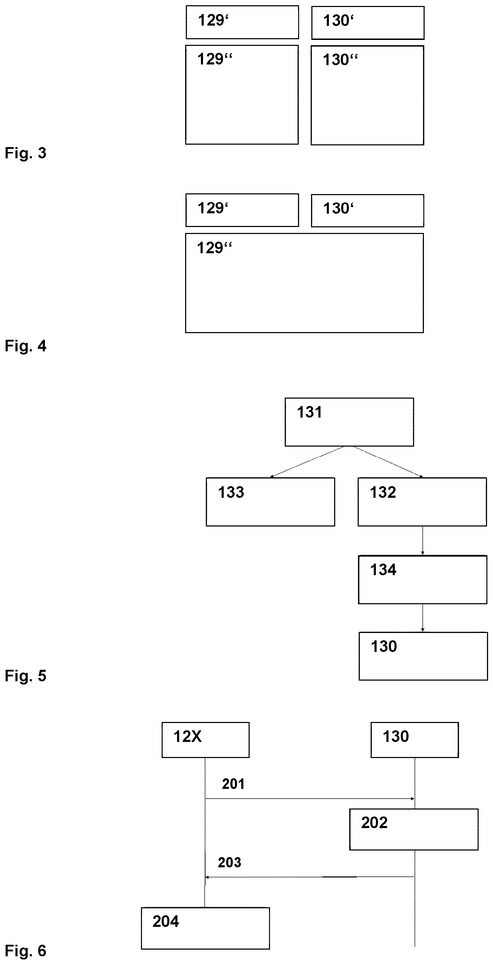

Figure 3 schematically illustrates an example of an implementation of the service level agreement function 130 in an embodiment where the service level agreement function 130 is separated (or independently realized) from the network data analytics function 129 of the mobile communication network. In the exemplary representation of Figure 3, this means that the service level agreement function use cases 130' as well as the service level agreement function basic data collection and handling framework 130" is/are separated from the network data analytics function use cases 129' and from the network data analytics function basic data collection and handling framework 129".

Figure 4 schematically illustrates an example of an implementation of the service level agreement function 130 in an embodiment where a joint realization of the service level agreement function 130 and the network data analytics function 129 is realized. In the exemplary representation of Figure 4, this means that the service level agreement function use cases 130' are separated - as in the representation of Figure 3 - from the network data analytics function use cases 129'; however, the service level agreement function 130 (or, rather, the service level agreement function use cases 130') use(s) the network data analytics function basic data collection and handling framework 129".

Figure 5 schematically illustrates an example of an implementation of how the service level agreement function is able to be configured and/or implemented using service level agreement templates: The service level agreement function 130 is able to be implemented, or to be deployed, based on service level agreement profiles, especially end-to-end service level agreement profiles; such service level agreement profiles are typically stored or available from a service level agreement management system 131. According to the present invention, it is especially preferred that - from such service level agreement profiles (of, or accessible via or at, the service level agreement system 131) - service level agreement profile templates are able to be obtained for the core network 120 (or 5G core) and/or for the radio access network 110; such service level agreement profiles for the core network 120 are schematically represented, in Figure 5, by means of reference sign 132, whereas such service level agreement profiles for the radio access network 110 are schematically represented, in Figure 5, by means of reference sign 133. In order to implement or deploy the service level agreement function 130 for the core network 120, a provisioning of such service level agreement profiles 132 for the core network 120 is performed, especially via, or using, the core network domain controller; this is schematically represented, in Figure 5, by means of reference sign 134.

Figure 6 schematically illustrates a communication diagram regarding the communication of a network function or service of the mobile communication network (especially of the core network 120 thereof) with the service level agreement function 130 according to the present invention. The network function or service is indicated, in Figure 6, by means of reference sign 12X in order to represent that this communication might relate to more or less any network function or service of the core network 120, especially including the network functions or services mentioned (and represented) in Figure 2, and especially a policy and charging function and/or an operations and maintenance network node. In a first processing step 201, the network function or service 12X transmits an analytics request (i.e. the analytics request message) - especially comprising an analytics identifier information, e.g. equal to "service level agreement xyz" or "SLAxyz" - to the service level agreement function 130 (i.e. the service level agreement function 130 receives the analytics request message in question). In a second processing step 202, the service level agreement function 130 performs a service level agreement function analytics generation - especially according to a "service level agreement xyz template" ("SLAxyz template"). In a third processing step 203, the service level agreement function 130 transmits the analytics response message (and the network function or service 12X receives the analytics response message. In a fourth processing step 204, the network function or service 12X is able to perform a healing execution, especially using a closed loop approach.

Hence, according to the present invention, by means of the service level agreement function 130, it is advantageously possible to provide the core network 120, especially a 5G core domain, with an end-to-end service level agreement management (E2E SLA management).

The service level agreement function 130 is especially able to be implemented as network data analytics function NWDAF. Especially, the service level agreement function 130 can be deployed as a standalone entity or functionality but with the principles of data collection and handling of the network data analytics function NWDAF - such an implementation is exemplarily represented in Figure 4 (joint network data analytics function-based data collection and handling framework; especially, the service level agreement function 130 is an analytics application (or app)). However, is alternatively also possible to implement the service level agreement function 130 as a separate function and a lifecycle that is purely tailored to service level agreement fullfillment for customer segments - represented exemplarily in Figure 3 (separated data collection and handling framework). Thereby especially, according to the present invention, the service level agreement function 130 is able to be instantiated accordingly for different purposes. Figure 3 points out the complete similar but separated data collection handling framework, whereas, in Figure 4 the service level agreement function 130 can be seen as another application (APP) on top of a joint data framework serving completely flexible but different analytics use cases (service level agreement-based use case) - i.e. compared to the network data analytics function use cases that are specified in TS 23.288.

As described in accordance with Figure 5 above, the service level agreement function 130 is advantageously able to be deployed with a special template (one or a plurality of templates) which describe(s) the analytics needed from the service level agreement function 130 in order to fulfill service level agreement(s) and/or closed loop healing requirements.

Especially, the template that is needed during deployment of the service level agreement function 130 could, e.g., look such as:

| | |
|---|---|
| SLA template components: | template contents: |
| input network data | network key performance indicators, service key performance indicators |
| input dimensions and filters | customer segment information, areas of interest, device types, radio access technology |
| output measurement and calculations recommendations | complex measurements, predictions, classifications per dimension and filter closed loops: |
| | 5G core healing (network function or service in 5G core), |
| | intra-domain healing (network function or service in operations and maintenance) |
| measurement and calculation algorithms | mathematics about the calculation of complex measurements. |

It is especially preferred, according to the present invention, that such deployment templates are generated in certain steps, especially according to the following steps (this is schematically shown in Figure 5):
-- intent translations:
   -- from customer facing intent via service intent, network domain intents (in the context of the present invention especially core network intents);
-- intent assurance translations:
   -- from service measurements to network measurements;
   -- measurement calculations;
   -- data collection, ingest.

It is especially preferred, according to the present invention, that the templates are required to be provisioned and deployed in order to correctly assure the service level agreement.

According to the present invention, the tasks of the service level agreement function 130 are especially one or a plurality out of the following:
-- deployment in a centralized or a decentralized manner (1:many);
-- the service level agreement function 130 especially runs autonomously and provides SLA measurements in near realtime;
-- the service level agreement function 130 collects data from operator 5GC data sources (potentially including customer segments information);
-- the service level agreement function 130 calculates all measurements;
-- the service level agreement function 130 predicts SLA violations (machine learning capabilities).

Basically all 5GC network functions or services and the operations and maintenance network functions or services can access the service level agreement function 130 for getting SLA-based analytics information. In case of requesting entity being a 5G core network function or service consumer (i.e. the entity transmitting the analytics request message to the service level agreement function 130), the present invention provides for the possibility of a self-healing in live 5G core network, especially implementing a closed loop approach within the live domain without interaction in the orchestration layer/domain controller. In case the requesting entity is an operations and maintenance consumer (i.e. operations and maintenance network function or service), the present invention provides for the possibility of a self-healing for 5G core with involvement of the domain orchestration layer and/or domain controller.
According to the present invention, the interface towards the service level agreement function 130 is especially realized such as to implement a service-based architecture.

Hence, according to the present invention, it is proposed to introduce the service level agreement function 130 which is especially configured via SLA templates and especially provides SLA analytics to the 5G core live network, i.e. to network functions or services as part thereof and/or as part of the operations and maintenance. Furthermore, the service level agreement function 130 especially provides a greater use case flexibility in comparison to the use cases of the network data analytics function NWDAF (as specified in TS 23.288), and, additionally, the service level agreement function 130 is tailored to customer segments and is able to make use of customer segment data.

Especially according to the present invention, any network function or service can access the measurement(s) (i.e. provided by the service level agreement function 130), especially via service-based interfaces, and initiate service improving measures based on the importance of the SLA or customer segment; e.g. the policy and charging function (PCF) can initiate quality-of-service (QoS) flow improvements or user equipment policy changes; the operations and maintenance can initiate changes in infrastructure and workload resources with the help of the orchestrator and/or the domain controller of the mobile communication network 100.

## Claims

1. Method for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises an operations and maintenance entity or functionality (125) and a network data analytics function (129), wherein the mobile communication network (100) and/or the core network (120) furthermore comprises a service level agreement function (130), wherein, in order to realize network service level improvement and/or for enhancing network efficiency within or related to the mobile communication network (100), one or a plurality of the network functions or services exchange messages with the service level agreement function (130), wherein the method comprises the following steps:
-- in a first step, the service level agreement function (130) receives an analytics request message,
-- in a second step, the service level agreement function (130) transmits an analytics response message.

2. Method according to claim 1, wherein the mobile communication network (100) and/or the core network (120) additionally comprises a domain controller entity or functionality or a domain orchestrator layer, wherein network service level improvement and/or enhancement of network efficiency results from the interaction between the network functions or services with the service level agreement function (130), especially without involving the domain controller entity or functionality or domain orchestrator layer.

3. Method according to one of the preceding claims, wherein, in the first step, the service level agreement function (130) receives the analytics request message from a network function or service of the mobile communication network (100), especially of the core network (120) thereof, and/or wherein, in the second step, the service level agreement function (130) transmits the analytics response message to the network function or service of the mobile communication network (100) - especially of the core network (120) thereof -, especially the one having transmitted the analytics request message.

4. Method according to one of the preceding claims, wherein the service level agreement function (130) provides one or a plurality of the following services and/or performs one or a plurality of the following tasks:
-- service level agreement measurements, especially in near real-time,
-- collection of data and/or information from operator core network data sources,
-- collection of data and/or information from customer segments,
-- calculation of measurements or of measurement results, especially of all measurements or measurement results,
-- predictions of future network performance and/or predictions of future violations of service level agreements.

5. Method according to one of the preceding claims, wherein - by means of an interaction of one or a plurality of network functions or services, as consumers, with the service level agreement function (130) - a reduction concerning the service level of the mobile communication network (100) and/or a violation of one or a plurality of service level agreements is able to be prevented and/or healed, especially within the core network (120), and especially in a closed loops approach within the live core network (120) domain, especially without interaction with the domain controller entity or functionality or domain orchestrator layer of the mobile communication network (100) or the core network (120) thereof.

6. Method according to one of the preceding claims, wherein - by means of an interaction of an operations and maintenance entity or functionality of the mobile communication network (100), as consumer, with the service level agreement function (130) - a reduction concerning the service level of the mobile communication network (100) and/or a violation of one or a plurality of service level agreements is able to be prevented and/or healed, especially within the core network (120), especially without interaction with the domain controller entity or functionality or domain orchestrator layer of the mobile communication network (100) or the core network (120) thereof.

7. Method according to one of the preceding claims, wherein the service level agreement function (130) is deployed or instantiated by means of using one or a plurality of deployment templates, especially based on intents, especially customer facing intents, service intents and/or network domain intents, especially core network intents.

8. Method according to one of the preceding claims, wherein the service level agreement function (130) is deployed according to a data collection and handling framework separated from the network data analytics function (129) or according to a data collection and handling framework jointly based on the network data analytics function (129).

9. System or mobile communication network (100) for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises an operations and maintenance entity or functionality (125) and a network data analytics function (129), wherein the mobile communication network (100) and/or the core network (120) furthermore comprises a service level agreement function (130), wherein, in order to realize network service level improvement and/or for enhancing network efficiency within or related to the mobile communication network (100), one or a plurality of the network functions or services exchange messages with the service level agreement function (130), wherein the system or mobile communication network (100) is configured such that:
-- the service level agreement function (130) receives an analytics request message,
-- the service level agreement function (130) transmits an analytics response message.

10. Service level agreement function (130) for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises an operations and maintenance entity or functionality (125) and a network data analytics function (129), wherein the mobile communication network (100) and/or the core network (120) furthermore comprises a service level agreement function (130), wherein, in order to realize network service level improvement and/or for enhancing network efficiency within or related to the mobile communication network (100), one or a plurality of the network functions or services exchange messages with the service level agreement function (130), wherein the service level agreement function (130) is configured such that:
-- the service level agreement function (130) receives an analytics request message,
-- the service level agreement function (130) transmits an analytics response message.

11. Program comprising a computer readable program code which, when executed on a computer and/or on a user equipment (20) and/or on a network node of a mobile communication network (100), especially realizing a service level agreement function (130), or in part on the user equipment (20) and/or in part on a network node of a mobile communication network (100), especially realizing a service level agreement function (130), causes the computer and/or the user equipment (20) and/or the network node of the mobile communication network (100), especially realizing the service level agreement function (130), to perform a method according one of claims 1 to 8.

12. Computer-readable medium comprising instructions which when executed on a computer and/or on a user equipment (20) and/or on a network node of a mobile communication network (100), especially realizing a service level agreement function (130), or in part on the user equipment (20) and/or in part on a network node of a mobile communication network (100), especially realizing a service level agreement function (130), causes the computer and/or the user equipment (20) and/or the network node of the mobile communication network (100), especially realizing the service level agreement function (130), to perform a method according one of claims 1 to 8.

## Amended claims

### Amended claims in accordance with Rule 137(2) EPC.

1. Method for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises an operations and maintenance entity or functionality (125) and a network data analytics function (129), wherein the mobile communication network (100) and/or the core network (120) furthermore comprises a service level agreement function (130), **characterized in that**, in order to realize network service level improvement and/or for enhancing network efficiency within or related to the mobile communication network (100), one or a plurality of the network functions or services exchange messages with the service level agreement function (130), wherein the method comprises the following steps:
-- in a first step, the service level agreement function (130) receives an analytics request message,
-- in a second step, the service level agreement function (130) transmits an analytics response message.

2. Method according to claim 1, wherein the mobile communication network (100) and/or the core network (120) additionally comprises a domain controller entity or functionality or a domain orchestrator layer, wherein network service level improvement and/or enhancement of network efficiency results from the interaction between the network functions or services with the service level agreement function (130), especially without involving the domain controller entity or functionality or domain orchestrator layer.

3. Method according to one of the preceding claims, wherein, in the first step, the service level agreement function (130) receives the analytics request message from a network function or service of the mobile communication network (100), especially of the core network (120) thereof, and/or wherein, in the second step, the service level agreement function (130) transmits the analytics response message to the network function or service of the mobile communication network (100) - especially of the core network (120) thereof -, especially the one having transmitted the analytics request message.

4. Method according to one of the preceding claims, wherein the service level agreement function (130) provides one or a plurality of the following services and/or performs one or a plurality of the following tasks:
-- service level agreement measurements, especially in near real-time,
-- collection of data and/or information from operator core network data sources,
-- collection of data and/or information from customer segments,
-- calculation of measurements or of measurement results, especially of all measurements or measurement results,
-- predictions of future network performance and/or predictions of future violations of service level agreements.

5. Method according to one of the preceding claims, wherein - by means of an interaction of one or a plurality of network functions or services, as consumers, with the service level agreement function (130) - a reduction concerning the service level of the mobile communication network (100) and/or a violation of one or a plurality of service level agreements is able to be prevented and/or healed, especially within the core network (120), and especially in a closed loops approach within the live core network (120) domain, especially without interaction with the domain controller entity or functionality or domain orchestrator layer of the mobile communication network (100) or the core network (120) thereof.

6. Method according to one of the preceding claims, wherein - by means of an interaction of an operations and maintenance entity or functionality of the mobile communication network (100), as consumer, with the service level agreement function (130) - a reduction concerning the service level of the mobile communication network (100) and/or a violation of one or a plurality of service level agreements is able to be prevented and/or healed, especially within the core network (120), especially without interaction with the domain controller entity or functionality or domain orchestrator layer of the mobile communication network (100) or the core network (120) thereof.

7. Method according to one of the preceding claims, wherein the service level agreement function (130) is deployed or instantiated by means of using one or a plurality of deployment templates, especially based on intents, especially customer facing intents, service intents and/or network domain intents, especially core network intents.

8. Method according to one of the preceding claims, wherein the service level agreement function (130) is deployed according to a data collection and handling framework separated from the network data analytics function (129) or according to a data collection and handling framework jointly based on the network data analytics function (129).

9. System or mobile communication network (100) for realizing network service level improvement and/or for enhancing network efficiency within or related to a mobile communication network (100), wherein the mobile communication network (100) comprises a radio access network (110) and a core network (120), wherein the mobile communication network (100) and/or the core network (120) comprises a plurality of network functions or services, wherein the plurality of network functions or services at least comprises an operations and maintenance entity or functionality (125) and a network data analytics function (129), wherein the mobile communication network (100) and/or the core network (120) furthermore comprises a service level agreement function (130), **characterized in that**, in order to realize network service level improvement and/or for enhancing network efficiency within or related to the mobile communication network (100), one or a plurality of the network functions or services exchange messages with the service level agreement function (130), wherein the system or mobile communication network (100) is configured such that:
-- the service level agreement function (130) receives an analytics request message,
-- the service level agreement function (130) transmits an analytics response message.

10. Program comprising a computer readable program code which, when executed on a computer and/or on a user equipment (20) and/or on a network node of a mobile communication network (100), especially realizing a service level agreement function (130), or in part on the user equipment (20) and/or in part on a network node of a mobile communication network (100), especially realizing a service level agreement function (130), causes the computer and/or the user equipment (20) and/or the network node of the mobile communication network (100), especially realizing the service level agreement function (130), to perform a method according one of claims 1 to 8.

11. Computer-readable medium comprising instructions which when executed on a computer and/or on a user equipment (20) and/or on a network node of a mobile communication network (100), especially realizing a service level agreement function (130), or in part on the user equipment (20) and/or in part on a network node of a mobile communication network (100), especially realizing a service level agreement function (130), causes the computer and/or the user equipment (20) and/or the network node of the mobile communication network (100), especially realizing the service level agreement function (130), to perform a method according one of claims 1 to 8.
